(19) Europäisches Patentamt
European Patent Office
Office européen des brevets

(11) **EP 4 597 183 A1**

(12) **EUROPEAN PATENT APPLICATION**

(43) Date of publication:
**06.08.2025  Bulletin 2025/32**

(21) Application number: **25153138.0**

(22) Date of filing: **21.01.2025**

(51) International Patent Classification (IPC):
**G02B 6/28** (2006.01)

(52) Cooperative Patent Classification (CPC):
**G02B 6/2856**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.01.2024  IT 202400001950**

(71) Applicants:
• **Politecnico di Bari**
  **70126 Bari (IT)**
• **Le Verre Fluoré SAS**
  **35170 Bruz (FR)**

(72) Inventors:
• **ANELLI, Francesco**
  **Bari (IT)**
• **ANNUNZIATO, Andrea**
  **Bari (IT)**
• **COZIC, Solenn**
  **Bruz (FR)**
• **LE PAYS DU TEILLEUL, Paul**
  **Bruz (FR)**
• **POULAIN, Samuel**
  **Bruz (FR)**
• **PRUDENZANO, Francesco**
  **Bari (IT)**

(74) Representative: **Perronace, Andrea et al**
  **Jacobacci & Partners S.p.A.**
  **Via Tomacelli, 146**
  **00186 Roma (IT)**

(54) **HIGH BEAM QUALITY OPTICAL FIBER COMBINER FOR MULTIWAVELENGTH SIGNAL DELIVERING**

(57)    The subject-matter of the present invention is a high beam quality optical fiber combiner for multiwavelength signal delivering.

The optical fiber combiner consists of a plurality of optical fibers inserted within a capillary which is adiabatically tapered.

The proposed device is characterized by a single mode/Gaussian-like optical beam propagation at the output port at different wavelength and in presence of both single or multiple inputs. By exciting N input optical fibers at N different wavelengths, N high quality (single mode/Gaussian-like) optical beams at different wavelengths are simultaneously obtained at the center of the output cross-section.

Fig. 1

**Description**

The present invention relates to a high beam quality optical fiber combiner for multiwavelength signal delivering.

## Background art

As well known, an optical fiber is a flexible, transparent dielectric waveguide generally made by drawing glass (silica, fluoride, chalcogenide, etc.) or plastic to a diameter slightly thicker than that of a human hair. Optical fibers are used most often as a means to transmit light between the two ends and find wide usage in optical communications, where they permit information transmission over longer distances and at higher frequencies (data transfer rates) than electrical cables. Optical fibers typically include a core surrounded by a cladding material with a lower index of refraction. Light is confined in the core by the phenomenon of total internal reflection which causes the fiber to act as a waveguide. Optical fibers that, in the simplified ray optics model, support many optical rays with different propagation paths (i.e. many transverse modes) are called multi-mode fibers (MMF), while those that support a single mode are called single mode fibers (SMF). Multi-mode fibers generally have a wider core diameter and are used for short-distance communication links and for applications where high power must be transmitted. Single mode fibers are used for most communication links longer than 1 km till the transoceanic ones.

There are coreless optical fibers as well, often called optical rods.

Microstructured fibers are characterized by a cross-section (transversal) with a more complex distribution of refractive index to obtain guiding mechanism.

Optical fiber can be tapered. This is made by modifying the geometry of the optical fiber by reducing its diameter. Tapering can be achieved through different techniques, such as flame brushing, chemical etching, or mechanical stretching. In a tapered optical fiber, a down taper refers to the region where the diameter of the fiber decreases moving along the length of the fiber. The waist of a tapered optical fiber is the region where the diameter is constant and at its minimum value. The up-taper refers to a region where the diameter of the fiber increases moving along the length of the fiber. Being able to join optical fibers with low loss is important in fiber optic communication. This is more complex than joining electrical wire or cable and involves careful cleaving of the fibers, precise alignment of the fiber cores, and the coupling of these aligned cores. For applications that demand a permanent connection a so-called fusion splice is common. In this technique, an electric arc is used to melt the ends of the fibers together. Another common technique is a mechanical splice, where the ends of the fibers are held in contact by mechanical force. Temporary or semi-permanent connections are made by means of specialized optical fiber connectors. Side splicing typically refers to a process in which two optical fibers are spliced together by aligning and fusing them from the sides (laterally), as opposed to the more common end-to-end splicing.

Optical pumping is a process in which light is used to raise electrons from a lower energy level to a higher energy level. This approach is commonly used in lasers and amplifier to pump the active medium (e.g. glass doped with rare earth), to achieve population inversion. Lasers can be based on an all-fiber setup, where fiber-coupled pump laser diodes, at lower wavelength, are directly connected, i.e. spliced, to the single mode active fiber via passive transport fibers. Usually, multi-mode optical fibers are exploited to transport the pump power. The pump power is injected in the active (rare-earth doped) optical fiber and absorbed by the active optical fiber. In this way, the signal wavelength, which is at higher wavelength than the pump wavelength, can be obtained at the other end of the active optical fiber.

Optical fiber combiners reported in the scientific literature, patented and/or available on market are characterized by different operation principles allowing different kinds of applications.

Most of the state-of-art patents regarding the optical fiber combiners/couplers propose novel fabrication techniques or improve the existing ones [1]-[15], in order to obtain better device performances, robustness and easiness of implementation. The combiners/couplers can be roughly classified considering the main operation principle/application, such as:

   a) combining the propagating optical beams from several input optical fibers into one output optical fiber (end-to-end);
   b) splitting the propagating optical beam from one input optical fiber into several optical fibers (end-to-end); or
   c) coupling the propagating optical beam of a side-spliced (laterally) tapered optical fiber with the beam of another optical fiber.

The operation principle/application a) refers to (i) optical fiber combiners named end-pump combiners or pump-signal combiners, and (ii) to obtain the so-called photonic lanterns:

   (i). For end-pump combiners and pump-signal combiners, the operation is devoted to the fabrication of monolithic fiber lasers and/or optical amplifiers. These devices are proposed in literature in two main configurations allowing the following applications (a_1) and (a_2):

(a_1) refers to end-pump combiners in which N pump multi-mode optical fibers are fused together to form the waist region. The obtained device can be spliced with an output optical fiber thus obtaining Nx1 combiner [23]-[28]. A multi-mode optical fiber spliced to the waist can be employed to improve the output beam quality but, at the same time, it decreases the device transmission efficiency (due to refractive index change and beam size mismatch). Moreover, to obtain high beam quality (single mode/Gaussian-like) at the output, all the input optical fibers must be excited simultaneously at the same wavelength. This device allows to deliver an increased optical power starting from N lower power optical beams;

(a_2) refers to pump-signal combiners in which N pump multi-mode optical fibers surround (or are close to) an active (i.e. rare earth doped) optical fiber. In this case the wavelength of the N pump optical beams is lower than that of signal which is generated/amplified in the active fiber via lasing phenomenon. Therefore, the active fiber is also called "signal fiber". All the optical fibers are fused together. The N pump powers are directly coupled with the signal beam to be generated/amplified in the active optical fiber. The combiner configuration is called $(N+1)\times 1$ [29]-[32].

(ii). In photonic lanterns, N single mode optical fibers enclosed in a capillary are fused together and drawn to form a single multi-mode output fiber. This device is attractive for Spatial Division Multiplexing (SDM) [33]. The spatial modes guided in the multi-mode waist are exploited to increase the number of data channels in MIMO (Multiple Input - Multiple Output) networks.

The operation principle/application in b) above refers to a device with a single multi-mode input and several single mode output optical fibers. Also in this case the device is known as photonic lantern [34]-[38]. It is the same device of a)- (ii) but it is used by exchanging the input with the output section. This kind of devices are typically exploited to perform spectral filtering in single mode optical fibers. The main application is in astronomy and spectroscopy or sensing. The input optical beam is divided into several single mode optical fibers. In [15] several equipment for the fabrication are described. Specific photonic lantern applications for space-division multiplexing are addressed in [16], [17].

The operation principle/application in c) refers to combiners based on side-pumping approach. The pump power is laterally injected into the active optical fiber (without access to the active optical fiber ends, contrarily to the end-pumping scheme) [39]-[40], [18]-[22]. Coreless optical fibers (i.e., optical rods) or thin cladding optical fibers can be employed as pump optical fibers. These are generally pre-tapered, and side spliced with the signal optical fiber. The typical aim is to deliver a high pump optical power in active fiber for lasing and amplification.

The solutions in [41], [23] are similar to other conventional devices. They are simply made with novel materials. They are based on fluoride glasses rather than the most used glasses (silica). These combiners do not allow the spatial combination and a gaussian beam at the center of the output section. This is evident by Fig. 13 of [23]. The beam is not in the center of the structure. In [23], when the three input fibers are excited, the output cross-section displays three different beams (in the three regions originated by the three pristine fiber cores).

## Object and subject-matter of the invention

It is the object of the present invention to provide an optical fiber combiner which overcomes the drawbacks and solves the issues of the prior art.

A subject-matter of the present invention is a device according to the appended claims.

## Detailed description of embodiments of the invention List of drawings

The invention will now be described by way of nonlimiting illustration, with particular reference to the drawings of the accompanying figures, in which:

- Figure 1 shows a first embodiment of an optical fiber combiner, according to the present invention;
- Figure 2 shows a central optical fiber for a second embodiment of an optical fiber combiner, according to the present invention;
- Figure 3 shows an optical fiber combiner output cross-section, according to the present invention;
- Figure 4 shows an equivalent optical fiber combiner output cross-section, according to the present invention;
- Figure 5 shows a refractive index dispersion as functions of the wavelength $\lambda$, according to the present invention;
- Figure 6 shows normalized propagation constants $\overline{\beta}$ of the optical modes as functions of the normalized frequency $V$, according to the present invention;
- Figure 7 shows a simulated electric field norm distribution via 2-D Finite Element Method (FEM) for the optical mode at the output cross-section of the optical fiber combiner, according to the present invention; and
- Figure 8 shows a simulated x-component electric field distribution via 3-D Beam Propagation Method (BPM) of the mode at the output cross-section of the optical fiber combiner, according to the present invention.

It is worth noting herein that elements of different embodiments can be combined together to provide further embodiments without restrictions by respecting the technical concept of the invention, as those skilled in the art will effortlessly understand from the description.

The present description also relates to the prior art for the implementation thereof, regarding the detail features not described, such as elements of minor importance usually used in the prior art in solutions of the same type.

When an element is introduced, it is always understood that there can be "at least one" or "one or more".

When a list of elements or characteristics is given in this description it is understood that the invention according to the invention "comprises" or alternatively "consists of" such elements.

Two or more of the parts (elements, devices, systems) described below can be freely associated and considered as part kits according to the invention.

**Embodiments**

The high beam quality optical fiber combiner 100 according to the present description is a device that combines different input signals into one output. The invention aims at combining different optical beams, at different wavelengths, into a single output beam, thus obtaining spatial and spectral combination. The novelty of the proposed device is that the output beam is single mode at different wavelengths and in presence of both single or multiple inputs.

The optical fiber combiner 100 consists of N optical fibers inserted within a capillary which is tapered via heating and drawing. An appropriate design of i) input optical fibers, ii) optical fiber arrangement within the capillary, iii) coupling between the satellite optical fibers and the one optical fiber positioned in the center of the structure, ensures the propagation of a high beam quality (single mode/Gaussian-like) output.

The approach is applicable to different materials, fiber kinds and technologies.

Other advantages with respect to the existing optical fiber combiners are the operation in a wide range of wavelengths, excellent transmission efficiency, novel applications originated by the property that exciting N input optical fibers at N different wavelengths, N high quality optical beams at different wavelengths are simultaneously obtained at the center of the combiner output cross-section.

The main industrial applications of this high beam quality optical fiber combiner are:

i) multispectral sensing;
ii) metrology;
iii) aerospace;
iv) telecommunications systems based on Wavelength Division Multiplexing (WDM) technology;
v) high power/high beam quality signal laser delivering.

The following description provides details on the operation and manufacturing process of the high beam quality optical fiber combiner.

The optical fiber combiner 100 according to the present description ensures the propagation at the output port of a single mode optical beam propagation over a wide wavelength range and regardless of the type of optical material used (e.g. silica glass, fluoride glass, germanate glass, chalcogenide glass, etc.). The designed device exhibits this kind of operation even by launching the optical signal only in one of the N input ports. This distinctive working principle is reached e.g. via the proper choice of the refractive index changes, obtainable with different glass composition, among the optical fibers/rods /capillary constituting the designed starting geometry, to be heated and drawn during the tapering process.

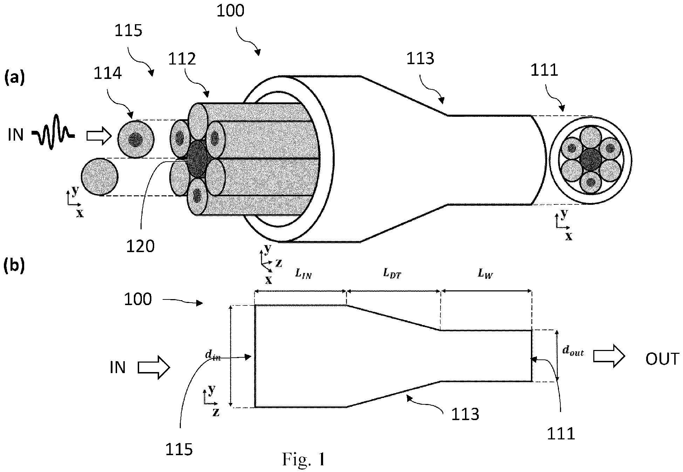

Fig. 1(a) shows a schematic representation of an embodiment of an optical fiber combiner 100 according to the present description. Satellite optical fibers are generically indicated with 114. Satellite rods are indicated with 112 by way of example. The one central rod is indicated with 120, wherein the satellite optical fibers and rods are arranged around the one central rod 120, in different possible fashions. The capillary enclosing the mentioned fibers is indicated with 113.

In the specific exemplary illustration, the arrangement of the satellite optical fibers and rods around the central rod 120 at the output cross-section 111 is hexagonal.

The fabrication of this device is carried out by inserting a plurality of optical fibers/rods 112, 114, 120 inside a capillary 113. The optical fiber combiner 100 is achieved when optical fibers/rods 112, 114, 120 and the capillary 113 are tapered together. In the following, for the sake of simplicity, only the tapering via heating and drawing will be mentioned, but it is understood that other known methods can be used. In Fig. 1(a), the darkness level of the grey is qualitatively proportional to the refractive index value of the material (the darker the larger refractive index). The central rod refractive index and the core of the optical fibers are black colored, indicating the highest refractive index.

The optical light is injected in one or more among the input optical fibers 114. According to standard art, it is guided in an adiabatic transition with low losses. Then, the injected optical beams are gradually coupled in the high refractive index central rod, exciting in the combiner 100 output cross-section 111 the fundamental mode, guided across the whole combiner.

The device operation principle is claimed in general. It should be noted that the first embodiment is not limited to the above-described configuration. For example, the first embodiment can be modified in terms of:

i) number N of input optical fibers;
ii) refractive index distribution;
iii) type of optical waveguide (i.e., each constituent of 112, 114, 120, can be single mode, multi-mode or rod fibers, step-index, graded index, multicladding, microstructured ones etc.);
iv) arrangement; and
v) fabrication method (flame sintering, arc discharge, laser heating, etc.).

The tapering process leads to the fabrication of a device characterized by an asymmetric geometry, consisting of N input ports 114, and one output port 111. At the input, 112, 113, 114, 120 are not fused together. At the output, 112, 113, 114, 120 are fused and drawn (via tapering) together and a single port 111 (characterized by single mode propagation) is accomplished.

Fig. 1(b) shows the longitudinal section (yz plane) of the optical fiber combiner 100 of Fig. 1(a). In Fig. 1(b), it is evident the straight input section having length $L_{IN}$, the down-taper section $L_{DT}$ (adiabatic transition), the waist section $L_W$, the input diameter $d_{in}$ (before taper) and the output diameter $d_{out}$ (after the taper) . The diameter $d_{out}$ (Fig. 1(b)) of the waist section (output 111 of the optical fiber combiner 100) is chosen so as to ensure the propagation of only the fundamental mode (single mode operation) in a wide range of wavelengths at the output cross-section, by means of a condition on the effective numerical aperture $\overline{NA}$ (and consequently on the normalized frequency $V$) specified below. Normally the numerical aperture is a difference between two refractive indices, but in the invention a more complex definition is given.

It is here to be specified that the combiner of the invention works even in the absence of a change in the refractive index of the central rod (or fiber). The change in refractive index along the longitudinal direction (the darker color indicates an increase in refractive index) i) improves performance in terms of coupling efficiency ii) is claimed only as an embodiment precisely because it is not essential.

A second embodiment is presented, designed for applications requiring higher efficiency and for assisting/enhancing the device operation keeping the same employed materials. The solution of the second embodiment refers to the change of refractive index along the propagation direction of the optical rod placed at the center of the optical fiber combiner geometry 120.

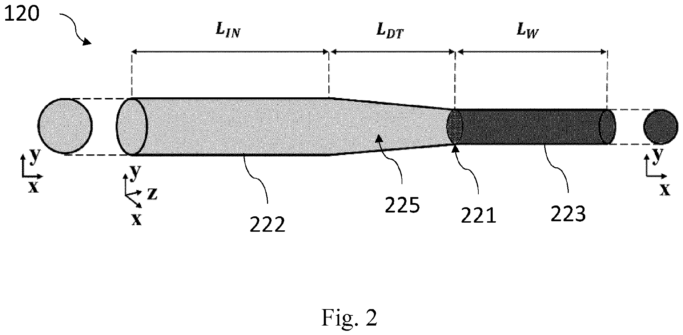

Fig. 2 shows an example of the change of refractive index along the propagation direction via a central rod to be exploited for the second embodiment. The key element of this second embodiment is related to design, construction and positioning of the rod placed at the center of the optical fiber combiner geometry. This central rod is made up of two sections, joined together 221. In the example, these two sections are basically two rods with a different refractive index but same diameter. This central rod is inserted within the capillary 113 with the plurality of satellite optical fibers/rods 112, 114 before the tapering process. The first section 222 has the function of rejecting/mitigating the optical coupling between the input satellite optical fibers and the central rod in the down-taper section $L_{DT}$ (225, Fig. 1(b)). The second section 223 of the central optical rod has higher refractive index. It starts at the waist section 221, and is long $L_W$. The second section 223 collects the optical power and ensures that the propagating modes are well coupled and guided in the center of the combiner 100.

It should be noted that this second embodiment is not limited to the above-described configuration. The second embodiment can be modified for example in terms of:

i) type of optical waveguide (i.e., each section of the central waveguide can be single mode, multi-mode or rod fibers, step-index, graded index, multicladding, microstructured ones etc.); and
ii) the position of 221.

## Morphological differences with prior devices

By the state of the art (prior devices), as mentioned before, in end-pump combiners, several multi-mode optical fibers, enclosed in a capillary, are employed for the device fabrication.

In pump-signal combiners, an active optical fiber surrounded by several multi-mode optical fibers, enclosed in a capillary, are employed for the device fabrication.

In photonic lanterns, several single mode optical fibers, enclosed in a capillary, are employed for the device fabrication.

The main morphological difference of these devices with the object of the invention is related to the presence of an ad-hoc arrangement of the optical fibers with a proper design that leads to the excitation of the fundamental mode, guided by the whole output cross-section, exploiting the designed refractive index changes. More precisely, the refractive index changes are obtained via the different glass compositions among optical fibers/rods/capillary.

It is necessary to design an output cross-section capable of guiding a single mode over a wide wavelength range. The operation is based on the coupling between the satellite optical fibers 114 and the optical fiber positioned in the center of the structure 120 leading to a high beam quality at different wavelengths. In other words, the waist region is single mode by exciting one or more input fiber and over a wide wavelength range.

**Functional differences with prior devices**

With respect to end-pump combiners or pump-signal combiners in the context of operation principle/application (a)(i) above, the differences are related to:

1. possibility to combine different optical beams at different wavelengths obtaining a high beam quality output. By exciting N input fibers 114 at N different wavelengths, N high quality optical beams at different wavelengths are simultaneously guided, obtaining spatial and spectral combination. On the contrary, to obtain a high power single mode/Gaussian-like beam at the output of the end-pump/pump-signal with prior combiners (state of the art) it is necessary the simultaneous excitation of all the pump fibers, symmetrically distributed, at the same wavelength;
2. possibility to excite only one input optical fiber obtaining a high beam quality output. This is not possible with prior combiners (state of the art); and
3. central confinement of the high beam quality output. This is not possible with prior combiners without simultaneous excitation of all the input fibers, the output laser location depending on the peculiar excited input fiber and/or the number of the excited input fibers; a further multimode fiber to be spliced at the waist end is generally required with a loss of transmission efficiency.

With respect to photonic lanterns (prior devices) merging N single mode fibers into a multi-mode output in the context of operation principle/application (a)(ii), the main functional difference are:

1. the single mode output, obtained in this invention with low losses due to the choice of a proper refractive index change of the starting geometry in the present invention.
2. prior devices can be used for SDM. On the contrary, the optical fiber combiner of the present patent can be exploited for WDM.

With respect to the photonic lantern (prior devices), excited in the multi-mode waist, in which the input optical beam is split in several not fused single mode optical fibers (operation principle/application (b)), the main functional difference is:

1. the excitation region of the device in the other side. Indeed, in this invention, the optical light is injected in the non-fused optical fibers 114 at the input 115.

With respect to side-pumping combiners in the context of operation principle/application (c), where the satellite waveguides are optical fibers/rods, the main differences are:

1. Side-pumped combiners for lasing/amplification (prior devices) can lead to lower overall efficiency than that of the end-pumped combiners employed before the active fibers for lasing/amplification. The present invention allows better pump coupling of the input optical fibers;
2. the input optical fibers 115 can be single mode; and
3. the side spliced fiber (prior devices) requires a more complex fabrication. It is avoided in the present invention.

With respect to [40,41], a gaussian beam is provided in the invention at the center of the output section, over a broad wavelength. The invention operation is different and allows the three (N) input beams, with different wavelengths $\lambda$, to be overlapped at the center of the output cross-section (providing a gaussian beam). In particular, the combiner in [42] is a typical end-pump combiner, commonly used to increase the level of optical power for pumping into the inner cladding of a double-clad fiber doped with rare earth elements, in order to achieve population inversion. Therefore, the combiner in [42] is not based on a distribution of optical fibers/rods that can meet the proposed normalized frequency V criterion, calculated at the output port.

**Design/Fabrication methodology**

In this section, a general design/fabrication methodology of a high beam quality optical combiner with high transmission efficiency is illustrated. It is worth nothing that the approach applies to both the embodiments described in this patent and it is also valid for different optical materials as well as different kind of fibers.

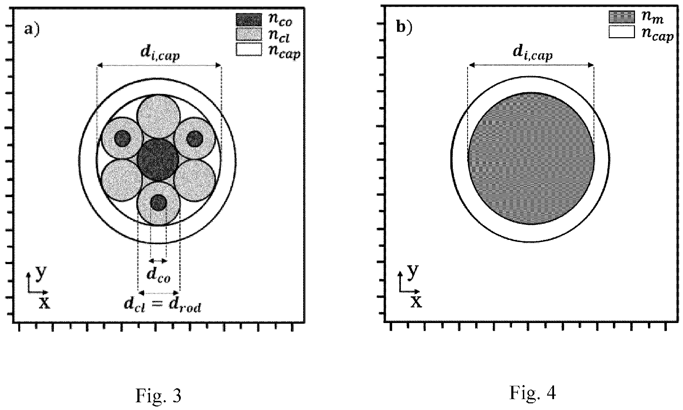

At first, an electromagnetic modal analysis can be performed in order to evaluate the effective refractive indices $n_{eff}$ of the electromagnetic modes in the waist region of the high beam quality optical fiber combiner, for different wavelength $\lambda$. Fig. 3 reports the optical fiber combiner output cross-section (e.g., refractive index distribution, optical fiber arrangement), which must be taken into account for the high beam quality optical fiber combiner design. The single mode criterion, at the optical fiber combiner output cross-section, implies that the condition $n_{cap} < n_{eff} < n_{co}$ is satisfied only for the fundamental mode, being $n_{cap}$ the capillary refractive index, $n_{eff}$ the effective refractive index (calculated by analytical models or by numerical simulations) and $n_{co}$ the core refractive index.

For ensuring a high beam quality at the output of the combiner in a wide range of wavelength $\lambda$, only the fundamental mode must be guided at the output. The single mode propagation criterion requires the design of an equivalent refractive index distribution $n_m$ for the domain within the capillary (see Fig. 4), starting from the refractive index distribution of Fig. 3. The weighted average refractive index $n_m$ is defined as reported in (1) where $A_{co}$, $A_{cl}$, $A_{cap}$ are the areas with refractive index respectively $n_{co}$, $n_{cl}$, $n_{cap}$ (see Fig. 4) .

$$n_m = \frac{n_{co}A_{co} + n_{cl}A_{cl} + n_{cap}A_{cap}}{A_{co} + A_{cl} + A_{cap}} \qquad (1)$$

Here, $A_{co}$ is cross-section area characterized by having refractive index $n_{co}$, as given by the sum of the areas of the cores of the plurality of the optical fibers 114 and the core of the central fiber or the central rod 120, $A_{cl}$ is the cross-section area characterized by having refractive index $n_{cl}$, as given by the sum of the cross section areas of the claddings of the plurality of optical fibers and/or rods 114,112 and areas between the plurality of optical fibers and/or rods and the one central rod or fiber 120, $A_{cap}$ is the cross-section area characterized by having refractive index $n_{cap}$, as given by the area between the internal diameter $d_{i,cap}$ of the capillary and the plurality of optical fibers and/or rods 114,112.

The equivalent refractive index distribution $n_m$ is employed to calculate the normalized frequency $V$ and the normalized propagation constant $\overline{\beta}$ as reported in equation (2) and equation (3).

$$V = \frac{2\pi}{\lambda} \, a \, \overline{NA} \qquad (2)$$

$$\bar{\beta} \approx \frac{n_{eff} - n_{cap}}{n_m - n_{cap}} \qquad (3)$$

where $a = d_{i,cap}/2$ is the capillary inner radius and $\overline{NA} = \sqrt{n_m^2 - n_{cap}^2}$ is an effective (equivalent) numerical aperture.

It is worth noting that this definition of effective numerical aperture $\overline{NA}$ and normalized frequency $V$ is different from that generally employed in classical fiber optic theory.

The effective refractive index $n_{eff}$ of the electromagnetic modes in the waist region is calculated via analytical models or numerical simulations. The calculation of the normalized propagation constant $\overline{\beta}$ provides the means to analyze the range in which the designed optical fiber combiner is characterized by a single-mode propagation. This involves designing the optical fiber combiner such that the normalized frequency $V$ is below a certain threshold $T$, ensuring that only the normalized propagation constant $\overline{\beta}$ of the fundamental mode is a physically feasible solution. The guided mode condition $n_{cap} < n_{eff} < n_{co}$ is verified only for the fundamental mode when the normalized frequency $V$ is below a certain threshold $T$.

We claim that, for the single mode combiner fabrication, the employed fibers, rods, capillary must provide $V < T$ with $5.5 < T < 7.5$ depending on the kind of fiber and glass. In this case, only the fundamental mode can be guided with low losses ensuring high beam quality output. This is not reported in literature.

For $V > T$ with $5.5 < T < 7.5$, higher modes can be guided, and the beam quality is lower.

The condition $V < T$ with $5.5 < T < 7.5$ is general and applicable for the design/fabrication of optical fiber combiner with different optical materials (e.g. silica, fluoride, chalcogenide).

According to a specific embodiment, $V < 7$, which holds for 90% of the cases.

**Example of high beam quality optical fiber combiner with indium fluoride optical fibers**

For the sake of clarity, in the following we report the design of the second embodiment by choosing as optical material the indium fluoride glass ($InF_3$).

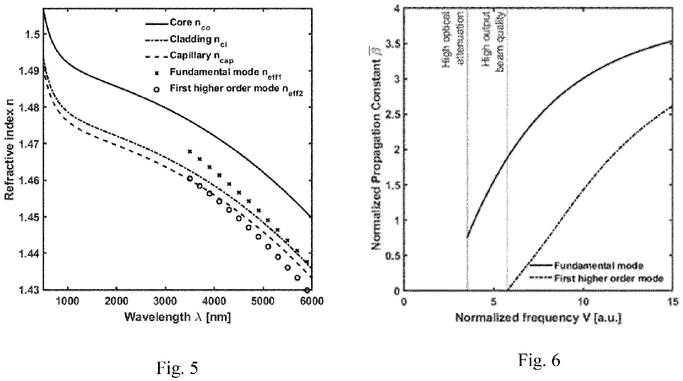

The geometry and the refractive index distribution of the cross-section of the optical fiber combiner are reported in Fig. 3. The core diameter is $d_{co} \approx 2.63 \ \mu m$, the cladding and rod diameters $d_{cl} = d_{rod} \approx 10.53 \ \mu m$, the capillary inner diameter $d_{i,cap} = 2a \approx 31.60 \ \mu m$. Figure 5 reports the refractive index dispersion of the core $n_{co}$ (solid line), cladding $n_{cl}$ (dash-dotted line), capillary (dotted line) as functions of the wavelength $\lambda$. The central rod 120 refractive index $n_{rod,co}$ is equal to the core refractive index $n_{co}$ of the satellite optical fibers 114 while the satellite rod 112 refractive index $n_{rod,sat}$ is equal to the cladding refractive index $n_{cl}$. The numerical apertures between core/cladding $NA_{co-cl}$ and between cladding/capillary $NA_{cl-cap}$ are reported in equation (4) and (5).

$$NA_{co-cl} = \sqrt{n_{co}^2 - n_{cl}^2} \approx 0.2 \qquad (4)$$

$$NA_{cl-cap} = \sqrt{n_{cl}^2 - n_{cap}^2} \approx 0.087 \qquad (5)$$

The electromagnetic modal analysis is performed via 2-D FEM to evaluate the effective refractive indices $n_{eff}$ of the propagating modes and thus to investigate their cut-off conditions. Fig. 5 shows also the effective refractive index of the fundamental mode $n_{eff1}$ (cross markers) and of the first higher order mode $n_{eff2}$ (circle markers) in the waist region (output section) as functions of the wavelength $\lambda$, calculated by considering the optical fiber combiner cross-section reported in Fig. 3. Only the fundamental mode respects the condition $n_{cap} < n_{eff} < n_{co}$ (included in the condition on V above), therefore, the single mode propagation at the output cross-section is verified.

Figure 6 reports the normalized propagation constant $\overline{\beta}$ of the fundamental mode and the first higher mode as functions of the normalized frequency $V$. In our example, if the normalized frequency $V < T$ with $T = 5.77$ only the fundamental mode can be guided.

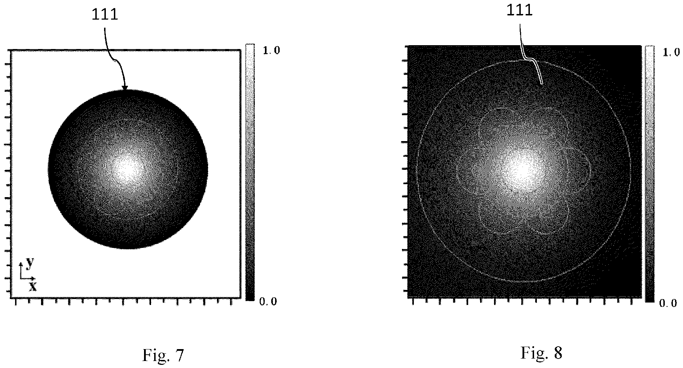

Fig. 7 shows the electric field norm distribution, in a grayscale, of the mode at the combiner output cross-section 111 of the above-described optical fiber combiner 100, simulated through 2-D FEM. White indicates the highest value of electric field norm ($V/m$), black the lowest value.

Fig. 7 makes evident that a proper design of the dimension of the output port, the optical fiber arrangement, and the refractive index difference between the optical fiber/rods, lead to a high quality optical beam. Moreover, the single mode output beam is guided for a wide range of wavelengths.

The feasibility of the approach is also verified via 3-D BPM, simulating the light propagation through the entire optical fiber combiner. A down-taper length $L_{DT} = 5 \ cm$ is here considered, ensuring the transition adiabaticity. The central rod refractive index is equal to cladding refractive index before the waist region, equal to core refractive index in the waist region.

Figure 8 reports the electric field x component $E_x$ of the field at the output cross-section of the proposed high beam quality combiner, having considered the effect of potential couplings. White indicates the highest value of electric field x component $E_x$ (V/m), black the lowest value.

Other FEM and BPM simulations at different wavelengths have confirmed that the output beam is characterized by high beam quality in the wavelength range $\lambda = [4300 - 6000] \ nm$. A slightly lower central rod refractive index in the waist region, a smaller cladding diameter $d_{cl} = d_{rod}$, and a lower $NA_{cl-cap}$ can extend the wavelength range in which the output is Gaussian-like.

Numerical results demonstrate:

    i) single mode/Gaussian-like optical beam at the output port;
    ii) operation in wide wavelength range; and
    iii) excellent transmission efficiency.

**Discussion**

The traditional need of coupling several components in conventional optical systems implies the employment of lenses and alignment stages in free propagation. The actual world scenario requires wavelengths combining but vibrations are detrimental for an effective coupling in free space. Free space propagation can deteriorate the optical beam quality and reduce the output power. In general, free space propagation is complex and needs a lot of care.

For most of the optical systems, the low mechanical robustness, the low integration level or compactness, and the optical alignment drawbacks are anyway crucial aspects which may be suppressed or strongly mitigated by the use of the optical fiber combiner of the invention. Moreover, the invention has the potential of reducing the cost.

The invention is strongly needed in spectroscopy and particularly in air sensing and aerospace applications where it is of paramount importance to have efficient, well stabilized and compact optical system. WDM optical communication is another area of application.

To conclude, the proposed product is new and can open market areas, filling the limits of current devices. The sales costs of the product depend on the material used and on the range of wavelengths of interest but promise to be competitive with respect to the nowadays solutions.

## Advantages

Some of the advantages of the present invention are the following: single mode/Gaussian-like output beam, high beam quality, extended operating wavelength band, possibility to deliver multiple signals at different wavelengths simultaneously. Moreover, the wavelength band limits of conventional optical fiber combiners are overcome.

The operation of the optical fiber combiner according to the present description allows to open new scenarios within the WDM for communication and multispectral sensing. In many industrial/medical applications such as cutting, welding, interferometry, wavelength conversion in non-linear materials, there is a need for high power and high beam quality. Furthermore, the proposed device may lead to reduce costs and increase the compactness of complex optical systems employed in a plethora of areas.

## References:

[1] CN103487885B, Novel optical fiber laser beam combiner and manufacturing method of combiner (2013);
[2] CN105891953B, Manufacturing device and manufacturing method of polarization maintaining optical fiber combiner (2019);
[3] CN109239847A, Optical fiber beam combiner and manufacturing method thereof (2019);
[4] CN109244816B, An optical fiber bundle combiner with a power monitoring device and a power monitoring method thereof (2019);
[5] CN113219588B, Manufacturing method and device of optical fiber beam combiner (2021);
[6] CN210668977U, Optical fiber combiner and input optical fiber thereof (2020);
[7] CN214097864U, Optical fiber beam combiner and high-power optical fiber laser (2021);
[8] CN214375389U, Optical fiber beam combiner (2021);
[9] JP5020509B2, Optical fiber type excitation combiner, optical fiber amplifier and optical fiber laser (2021);
[10] CN102778729A, High beam quality signal light fiber beam combiner and manufacture method thereof (2012);
[11] KR102162811B1, Low-mode high power fiber combiner (2014);
[12] KR101544455_B1, Optical fiber pump-signal combiner and method of manufacturing for pump-signal combiner (2013);
[13] US8830568B2, High beam quality and high average power from large-core-size optical-fiber amplifiers (2011);
[14] EP2005228B1, An optical coupler, a method of its fabrication and use (2014);
[15] US20200083659A1, Photonic Lantern Structures and Devices (2019);
[16] US9411100B2, Photonic lantern spatial multiplexers with mode selectivity (2013);
[17] US2015086157A1, Photonic Lantern Spatial Multiplexers with mode selectivity (2015);
[18] CN102879860A, Fiber side-pump power combiner and laser processing system (2011);
[19] CN209896429U, Mid-infrared band side pumping optical fiber pumping signal combiner (2018);
[20] CN113809625B, Side pump combiner for high-power fiber laser system (2021);
[21] CN106299983A, Side-pumping middle-infrared band fiber pumping signal beam combiner (2017);
[22] US8818151B1, Fiber Pump Signal Combiner (2014);
[23] A. Annunziato, F. Anelli, P. Le Pays Du Teilleul, S. Cozic, S. Poulain, and F. Prudenzano, "Fused optical fiber combiner based on indium fluoride glass: perspectives for mid-IR applications" in Opt. Express, vol. 30, no. 24, pp. 44160-44174, 2022;
[24] P. Baer, P. Cebeci, M. Giesberts, and Oliver Fitzau, "Design and fabrication of a fused $7 \times 1$ 35/50 $\mu$m into 125/250 $\mu$m fiber combiner" in OSA Contin., vol. 2, no. 4, pp. 1106-1112, 2019;
[25] R. R. Gattass, L. B. Shaw, F. H. Kung, D. J. Gibson, V. Q. Nguyen, G. D. Chin, L. E. Busse, I. D. Aggarwal, and J. S. Sanghera, "Infrared Fiber N $\times$ 1 Multimode Combiner" in IEEE Photonics J., vol. 5, no. 5, pp. 7100905-7100905, 2013;
[26] B. Lei, Y. Gu, Z. Chen, Z. Wang, P. Zhou, Y. Ma, H. Xiao, J. Leng, X. Wang, J. Hou, X. Xu, J. Chen, and Z. Liu, "Incoherent beam combining of fiber lasers by an all-fiber $7 \times$ 1 signal combiner at a power level of 14 kW" in Opt.

Express, vol. 26, no. 8, pp. 10421-10427, 2018;

[27] F. Min, L. Zhixian, W. Zefeng, C. Zilun, and X. Xiaojun, "Research on a 4× 1 fiber signal combiner with high beam quality at a power level of 12kW" in Opt. Express, vol. 29, no. 17, pp. 26658-26668, 2021;

[28] I. S. Choi, J. Park, H. Jeong, J. W. Kim, M. Y. Jeon, and H. S. Seo, "Fabrication of 4× 1 signal combiner for high-power lasers using hydrofluoric acid" in Opt. Express, vol. 26, no. 23, 30667-30677, 2018;

[29] Y. Liu et al., "5-kW-Level Bi-Directional High-Efficiency Pump and Signal Combiner With Negligible Beam Quality Degradation" in IEEE Photonics Journal, vol. 14, no. 1, pp. 1-6, Feb. 2022;

[30] D. Majumder, S. D. Chowdhury and A. Pal, "Mode-Field Matched Pump-Signal Combiner for High Power Fiber Laser in Advanced Manufacturing" in IEEE Journal of Selected Topics in Quantum Electronics, vol. 27, no. 6, pp. 1-9, Nov.-Dec. 2021;

[31] Y. Gu, C. Lei, H. Yang, H. Xiao, J. Leng, and Z. Chen, "High-beam-quality signal and pump combiner with large-mode-area fiber for high-power fiber laser and amplifier" in Appl. Opt., vol. 58, no. 6, pp. 1336-1340, 2019;

[32] Q. Xiao, P. Yan, H. Ren, X. Chen, and M. Gong, "Pump-signal combiner with large-core signal fiber feed-through for fiber lasers and amplifiers" in Appl. Opt., vol. 52, no. 3, pp. 409-414, 2013;

[33] N. K. Fontaine, R. Ryf, J. Bland-Hawthorn, S. G. Leon-Saval, "Geometric requirements for photonic lanterns in space division multiplexing" in Opt. Express, vol. 20, pp. 27123-27132, 2012;

[34] D. Noordegraaf, P. M. W. Skovgaard, R. H. Sandberg, M. D. Maack, J. Bland-Hawthorn, J. S. Lawrence, J. Lægsgaard, "Nineteen-port photonic lantern with multimode delivery fiber" in Opt. Lett., vol. 37, pp. 452-454, 2012;

[35] D. Noordegraaf, P. M. W. Skovgaard, M. D. Maack, J. Bland-Hawthorn, R. Haynes, J. Lægsgaard, "Multi-mode to single mode conversion in a 61 port photonic lantern" in Opt. Express, vol. 18, pp. 4673-4678, 2010;

[36] S. G. Leon-Saval, A. Argyros, J. Bland-Hawthorn, "Photonic lanterns: a study of light propagation in multimode to single mode converters" in Opt. Express, vol. 18, pp. 8430-8439, 2010;

[37] J. Bland-Hawthorn, S. C. Ellis, S. G. Leon-Saval, R. Haynes, M. M. Roth, H.-G. Löhmannsröben, A. J. Horton, J.-G. Cuby, T. A. Birks, J. S. Lawrence, P. Gillingham, S. D. Ryder, C. Trinh, "A complex multi-notch astronomical filter to suppress the bright infrared sky" in Nature Commun., vol. 2, no. 581, 2011;

[38] D. Noordegraaf, P. M. W. Skovgaard, M. D. Nielsen, J. Bland-Hawthorn, "Efficient multi-mode to single mode coupling in a photonic lantern" in Opt. Express, vol. 17, pp. 1988-1994, 2009;

[39] Z. Li, X. Tian, C. Lei, H. Zhang, Z. Chen, B. Yang, X. Xi, X. Wang, Z. Wang, and J. Chen, "Fabrication of a side pump combiner and realization of a 2 kW single mode all-fiber laser oscillator" in OSA Continuum vol. 3, no. 5, pp. 1240-1248, 2020;

[40] C. Jauregui, S. Böhme, G. Wenetiadis, J. Limpert, and A. Tünnermann, "Side-pump combiner for all-fiber monolithic fiber lasers and amplifiers," in J. Opt. Soc. Am. B, vol. 27, no. 5, pp. 1011-1015, 2010;

[41] ANNUNZIATO ANDREA ET AL: "Optical Combining in Medium Infrared Wavelength Range and Its Applications", 2023 23RD INTERNATIONAL CONFERENCE ON TRANSPARENT OPTICAL NETWORKS (ICTON), IEEE, 2 July 2023 (2023-07-02), pages 1-4.

**Claims**

1. An optical fiber combiner (100), comprising a plurality of optical fibers and/or rods (112,114) extending along a longitudinal direction around a one central (120) rod or fiber and enclosed in a capillary (113) having an internal diameter $d_{i,cap}$, the optical fibers having corresponding cores, the optical fiber combiner extending from a plurality of input ports (115) constituted by ends of the plurality of optical fibers and/or rods to single output port (111) after a down-taper portion ($L_{DT}$) of the capillary (113) which is tapered along the longitudinal direction,
   the combiner being **characterized in that**:

   - the one central rod or fiber (120) is made up of a first (222,225) and a second (223) section, wherein the first section comprises a first length (222, $L_{IN}$) and a second length (225, $L_{DT}$) which is the down-taper portion of the optical fiber combiner;
   - the optical fiber combiner is configured to guide light of wavelength $\lambda$ from the input ports to the output port such that the normalized frequency V at the output port (111) is:

$$V = \frac{2\pi}{\lambda} a \, \overline{NA} < T \qquad \text{with} \quad 5.5 < T < 7.5$$

wherein $a = d_{i,cap}/2$ is the capillary inner radius and $\overline{NA} = \sqrt{n_m^2 - n_{cap}^2}$ is a numerical aperture of the capillary wherein an equivalent refractive index $n_m$ for the optical fiber combiner is defined, at the output port (111), as:

$$n_m = \frac{n_{co}A_{co} + n_{cl}A_{cl} + n_{cap}A_{cap}}{A_{co} + A_{cl} + A_{cap}}$$

Wherein $A_{co}$ is cross-section area **characterized by** having refractive index $n_{co}$, as given by the sum of the areas of the cores of the plurality of the optical fibers (114) and the core of the central fiber or the central rod (120), $A_{cl}$ is the cross-section area **characterized by** having refractive index $n_{cl}$, as given by the sum of the cross section areas of the claddings of the plurality of optical fibers and/or rods (114,112) and areas between the plurality of optical fibers and/or rods and the one central rod or fiber (120), $A_{cap}$ is the cross-section area **characterized by** having refractive index $n_{cap}$, as given by the area between the internal diameter $d_{i,cap}$ of the capillary and the plurality of optical fibers and/or rods (114,112).

2. An optical fiber combiner (100) according to claim 1, wherein the first (222,225) and second (223) section are made in two corresponding pieces joined together at a joining section (221), wherein and the first (222,225) and second (223) sections have different refractive indexes and same cross section at the joining section (221).

3. An optical fiber combiner (100) according to claim 1 or 2, wherein the plurality of optical fibers and/or rods (112,114) is disposed around the one central fiber or rod (120) in an hexagonal manner (111).

4. An optical fiber combiner (100) according to any one claim 1 to 3, wherein the plurality of optical fibers and/or rods (112,114) are symmetrically arranged around the one central rod or fiber (120).

5. An optical fiber combiner (100) according to claim 1-4, wherein the $T = 7$.

6. A method for combining a plurality of input optical signals into one single-mode optical output, **characterized in that** the optical fiber combiner (100) according to any claim 1-5 is used and the following steps are performed:

   - injecting the plurality of input optical signals into respective optical fibers (114) of the plurality of optical fibers and/or rods (112,114) at the plurality of input ports (115); and
   - obtaining the single-mode optical output from the central rod at the output port (111).

Fig. 1

Fig. 2

Fig. 3

Fig. 4

Fig. 5

Fig. 6

Fig. 7

Fig. 8

**EUROPEAN SEARCH REPORT**

Europäisches
Patentamt
European
Patent Office
Office européen
des brevets

**Application Number**

EP 25 15 3138

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANNUNZIATO ANDREA ET AL: "Optical Combining in Medium Infrared Wavelength Range and Its Applications", 2023 23RD INTERNATIONAL CONFERENCE ON TRANSPARENT OPTICAL NETWORKS (ICTON), IEEE, 2 July 2023 (2023-07-02), pages 1-4, XP034395447, DOI: 10.1109/ICTON59386.2023.10207305 * sections 2, 3 * * figures 1, 2 * | 1-6 | INV. G02B6/28 |
| A | ANNUNZIATO ANDREA ET AL: "Fused optical fiber combiner based on indium fluoride glass: perspectives for mid-IR applications", OPTICS EXPRESS , vol. 30, no. 24 17 November 2022 (2022-11-17), page 44160, XP093191834, US ISSN: 1094-4087, DOI: 10.1364/OE.471090 Retrieved from the Internet: URL:https://opg.optica.org/directpdfaccess /6f38279e-c726-4c13-b4d7865c604434bc_52182 0/oe-30-24-44160.pdf?da=1&id=521820&seq=0& mobile=no * section 2 * * figures 1-3 * | 1-6 | |

TECHNICAL FIELDS SEARCHED (IPC)

G02B

-/--

The present search report has been drawn up for all claims

| Place of search | Date of completion of the search | Examiner |
|---|---|---|
| The Hague | 27 May 2025 | Hohmann, Leander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 25 15 3138

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI YUWEI ET AL: "Design and fabrication of >20 KW 5 x 1 pump combiner with high efficiency", OPTICS AND LASER TECHNOLOGY, ELSEVIER SCIENCE PUBLISHERS BV., AMSTERDAM, NL, vol. 163, 4 April 2023 (2023-04-04), XP087300707, ISSN: 0030-3992, DOI: 10.1016/J.OPTLASTEC.2023.109453 [retrieved on 2023-04-04] * the whole document * | 1-6 | |
| A | ZHOU YANYAN ET AL: "All-fiber cascaded combiners for high-power adjustable-ring mode laser beam with a flattop central beam", OPTICS AND LASER TECHNOLOGY, ELSEVIER SCIENCE PUBLISHERS BV., AMSTERDAM, NL, vol. 163, 9 March 2023 (2023-03-09), XP087300862, ISSN: 0030-3992, DOI: 10.1016/J.OPTLASTEC.2023.109324 [retrieved on 2023-03-09] * the whole document * | 1-6 | TECHNICAL FIELDS SEARCHED (IPC) |

The present search report has been drawn up for all claims

| Place of search | Date of completion of the search | Examiner |
|---|---|---|
| The Hague | 27 May 2025 | Hohmann, Leander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103487885 B
- CN 105891953 B
- CN 109239847 A
- CN 109244816 B
- CN 113219588 B
- CN 210668977 U
- CN 214097864 U
- CN 214375389 U
- JP 5020509 B
- CN 102778729 A
- KR 102162811 B1

- KR 101544455 B1
- US 8830568 B2
- EP 2005228 B1
- US 20200083659 A1
- US 9411100 B2
- US 2015086157 A1
- CN 102879860 A
- CN 209896429 U
- CN 113809625 B
- CN 106299983 A
- US 8818151 B1

**Non-patent literature cited in the description**

- **A. ANNUNZIATO ; F. ANELLI ; P. LE PAYS DU TEILLEUL ; S. COZIC ; S. POULAIN ; F. PRUDEN-ZANO**. Fused optical fiber combiner based on indium fluoride glass: perspectives for mid-IR applications. *Opt. Express*, 2022, vol. 30 (24), 44160-44174
- **P. BAER ; P. CEBECI ; M. GIESBERTS ; OLIVER FITZAU**. Design and fabrication of a fused $7 \times 1$ 35/50 μm into 125/250 μm fiber combiner. *OSA Contin.*, 2019, vol. 2 (4), 1106-1112
- **R. R. GATTASS ; L. B. SHAW ; F. H. KUNG ; D. J. GIBSON ; V. Q. NGUYEN ; G. D. CHIN ; L. E. BUSSE ; I. D. AGGARWAL ; J. S. SANGHERA**. Infrared Fiber N × 1 Multimode Combiner. *IEEE Photonics J*, 2013, vol. 5 (5), 7100905-7100905
- **B. LEI ; Y. GU ; Z. CHEN ; Z. WANG ; P. ZHOU ; Y. MA ; H. XIAO ; J. LENG ; X. WANG ; J. HOU**. Incoherent beam combining of fiber lasers by an all-fiber $7 \times 1$ signal combiner at a power level of 14 kW. *Opt. Express*, 2018, vol. 26 (8), 10421-10427
- **F. MIN ; L. ZHIXIAN ; W. ZEFENG ; C. ZILUN ; X. XIAOJUN**. Research on a $4 \times 1$ fiber signal combiner with high beam quality at a power level of 12kW. *Opt. Express*, 2021, vol. 29 (17), 26658-26668
- **I. S. CHOI ; J. PARK ; H. JEONG ; J. W. KIM ; M. Y. JEON ; H. S. SEO**. Fabrication of $4 \times 1$ signal combiner for high-power lasers using hydrofluoric acid. *Opt. Express*, 2018, vol. 26 (23), 30667-30677
- **Y. LIU et al.** 5-kW-Level Bi-Directional High-Efficiency Pump and Signal Combiner With Negligible Beam Quality Degradation. *IEEE Photonics Journal*, February 2022, vol. 14 (1), 1-6

- **D. MAJUMDER ; S. D. CHOWDHURY ; A. PAL**. Mode-Field Matched Pump-Signal Combiner for High Power Fiber Laser in Advanced Manufacturing. *IEEE Journal of Selected Topics in Quantum Electronics*, November 2021, vol. 27 (6), 1-9
- **Y. GU ; C. LEI ; H. YANG ; H. XIAO ; J. LENG ; Z. CHEN**. High-beam-quality signal and pump combiner with large-mode-area fiber for high-power fiber laser and amplifier. *Appl. Opt.*, 2019, vol. 58 (6), 1336-1340
- **Q. XIAO ; P. YAN ; H. REN ; X. CHEN ; M. GONG**. Pump-signal combiner with large-core signal fiber feed-through for fiber lasers and amplifiers. *Appl. Opt.*, 2013, vol. 52 (3), 409-414
- **N. K. FONTAINE ; R. RYF ; J. BLAND-HAWTHORN ; S. G. LEON-SAVAL**. Geometric requirements for photonic lanterns in space division multiplexing. *Opt. Express*, 2012, vol. 20, 27123-27132
- **D. NOORDEGRAAF ; P. M. W. SKOVGAARD ; R. H. SANDBERG ; M. D. MAACK ; J. BLAND-HAW-THORN ; J. S. LAWRENCE ; J. LÆGSGAARD**. Nineteen-port photonic lantern with multimode delivery fiber. *Opt. Lett.*, 2012, vol. 37, 452-454
- **D. NOORDEGRAAF ; P. M. W. SKOVGAARD ; M. D. MAACK ; J. BLAND-HAWTHORN ; R. HAYNES ; J. LÆGSGAARD**. Multi-mode to single mode conversion in a 61 port photonic lantern. *Opt. Express*, 2010, vol. 18, 4673-4678
- **S. G. LEON-SAVAL ; A. ARGYROS ; J. BLAND-HAWTHORN**. Photonic lanterns: a study of light propagation in multimode to single mode converters. *Opt. Express*, 2010, vol. 18, 8430-8439

- **J. BLAND-HAWTHORN** ; **S. C. ELLIS** ; **S. G. LEON-SAVAL** ; **R. HAYNES** ; **M. M. ROTH** ; **H.-G. LÖHMANNSRÖBEN** ; **A. J. HORTON** ; **J.-G. CUBY** ; **T. A. BIRKS** ; **J. S. LAWRENCE**. A complex multi-notch astronomical filter to suppress the bright infrared sky. *Nature Commun*, 2011, vol. 2 (581)
- **D. NOORDEGRAAF** ; **P. M. W. SKOVGAARD** ; **M. D. NIELSEN** ; **J. BLAND-HAWTHORN**. Efficient multimode to single mode coupling in a photonic lantern. *Opt. Express*, 2009, vol. 17, 1988-1994
- **Z. LI** ; **X. TIAN** ; **C. LEI** ; **H. ZHANG** ; **Z. CHEN** ; **B. YANG** ; **X. XI** ; **X. WANG** ; **Z. WANG** ; **J. CHEN**. Fabrication of a side pump combiner and realization of a 2 kW single mode all-fiber laser oscillator. *OSA Continuum*, 2020, vol. 3 (5), 1240-1248
- **C. JAUREGUI** ; **S. BÖHME** ; **G. WENETIADIS** ; **J. LIMPERT** ; **A. TÜNNERMANN**. Side-pump combiner for all-fiber monolithic fiber lasers and amplifiers. *J. Opt. Soc. Am. B*, 2010, vol. 27 (5), 1011-1015
- Optical Combining in Medium Infrared Wavelength Range and Its Applications. **ANNUNZIATO ANDREA et al.** 023 23RD INTERNATIONAL CONFERENCE ON TRANSPARENT OPTICAL NETWORKS (ICTON). IEEE, 02 July 2023, 1-4